# EUROPÄISCHE PATENTSCHRIFT

(11) **EP 1 618 641 B1**
(45) Veröffentlichungstag und Bekanntmachung des Hinweises auf die Patenterteilung: **30.05.2007**
(21) Anmeldenummer: 04730244.3
(22) Anmeldetag: 29.04.2004
(51) Int. Cl.: H02H 9/00

(54) **ENERGIEVERSORGUNG EINES MESSGERÄTES**
POWER SUPPLY FOR A MEASURING APPARATUS
ALIMENTATION EN ENERGIE D'UN APPAREIL DE MESURE

(30) Priorität: 30.04.2003 DE 10319793
(43) Veröffentlichungstag der Anmeldung: 25.01.2006
(73) Patentinhaber: ENDRESS + HAUSER GMBH + CO., 79689 Maulburg (DE)
(72) Erfinder: SCHÄFER, Klaus, 79618 Rheinfelden (DE); TRINLER, Jörg, 79689 Maulburg (DE); KOPRIAN, Alexander, 79686 Hasel (DE)
(74) Vertreter: Andres, Angelika Maria
(86) Internationale Anmeldenummer: PCT/EP2004/004579
(87) Internationale Veröffentlichungsnummer: WO 2004/098014

(56) Entgegenhaltungen:
- GB-A- 1 502 056
- GB-A- 2 005 932
- US-A- 5 710 552
- US-B1- 6 397 322

## Beschreibung

Die Erfindung bezieht sich auf eine Energieversorgungseinheit für ein Messgerät zur Bestimmung und/oder Überwachung einer physikalischen oder chemischen Prozessgröße eines Mediums. Bei den Prozessgrößen kann es sich um den Füllstand, die Viskosität, den Druck, die Dichte oder auch um den pH-Wert eines Mediums handeln. Die Messgeräte sind dann jeweils entsprechend. Von der Anmelderin werden z.B. unter der Bezeichnung Cerabar Druckmessgeräte hergestellt und vertrieben.

Messgeräte benötigen für die Messung, für die Auswertung und ggf. auch für die Anzeige der gemessenen Werte eine Energieversorgung. Es ist jedoch nicht immer möglich, eine passende Stromverbindung z.B. über Kabel herzustellen. Ein solches Problem ist z.B. gegeben, wenn der Füllstand von Flüssigkeiten in mobilen Einheiten gemessen werden soll. Daher ist es sinnvoll, z.B. Batterien oder Brennstoffzellen einzusetzen. Finden jedoch Messungen z.B. in explosionsgefährdeten Zonen oder Bereichen statt, so ist auf besondere Sicherheit zu achten. Es muss z.B. darauf geachtet werden, dass sich durch einen Kurzschluss keine zu hohen Spannungen ergeben oder dass durch zu hohe Ströme keine zu starke Wärmeentwicklung auftritt. Ein weiteres Problem ist üblicherweise, dass solche Energieeinheiten wie Batterien oder Brennstoffzellen nicht in den explosionsgefährdeten Bereichen ausgetauscht werden dürfen, weil meist der Schutz vor Explosionen beim Betrieb durch den Austausch aufgehoben wird oder nicht mehr sicher ist.

Aus dem Stand der Technik ist es bekannt, dass mindestens eine Spannungsbegrenzungseinheit und/oder mindestens eine Strombegrenzungseinheit in der Energieversorgungseinheit vorgesehen ist, wobei die Spannungsbegrenzungseinheit derartig ausgestaltet ist, dass auftretende Spannungen unter einem Wert bleiben, der in einem explosionsgefährdeten Bereich zu einer Explosion führt, und/oder wobei die Strombegrenzungseinheit derartig ausgestaltet ist, dass auftretende Ströme und/oder damit verbundene Erwärmungen unter einem Wert bleiben, der in einem explosionsgefährdeten Bereich zu einer Explosion führt. Die genauen Grenzwerte hängen dabei von der explosionsgefährdeten Zone selbst und den dort herrschenden Bedingungen ab. Die Idee besteht also darin, dass die Energieversorgungseinheit so ausgestaltet ist, dass die Spannung und/oder der Strom begrenzt-werden, so dass es weder durch die Spannung, noch durch die mit dem Strom einhergehende Erwärmung zu einer Explosion kommen kann. Dies erlaubt es, dass die Energieversorgungseinheit auch in explosionsgefährdeten Bereichen, z.B. bei Wasserstofftanks anwendbar ist.

Eine solche Energieversorgungseinheit ist in GB 2 005 932, das als nächstliegender Stand der Technik angesehen wird, gezeigt.

Die bekannte Ausgestaltung beinhaltet, dass in der Energieversorgungseinheit mindestens eine Energiequelle vorgesehen ist. Es soll sich also z.B. nicht um eine normale Stromversorgung über Stromleitungen handeln, sondern es soll ein möglichst autarkes und in sich abgeschlossenes System ermöglicht werden, das z.B. auch Mobilität erlaubt.

Eine Übliche Ausgestaltung sieht vor, dass es sich bei der Energiequelle um mindestens eine Batterie und/oder mindestens eine Brennstoffzelle handelt. Aufgabe der Erfindung ist es, eine Energieversorgung eines Messgerätes zu gestalten welche einen sicheren Austausch der eigentlichen Energiequelle vor Ort im explosiongefördeten Bereich ermöglicht.

Diese Aufgabe wird durch eine Energieversorgungseinheit gemäss Anspruch 1 gelöst.

Die erfindungsgemässige Ausgestaltung beinhaltet, dass in der Energieversorgungseinheit mindestens eine Kapseleinheit vorgesehen ist, in der die Energiequelle befindlich ist. Eine Erweiterung beinhaltet, dass diese Kapseleinheit gegenüber Manipulationen derart geschützt ist, dass sie nur vom Hersteller geöffnet werden kann und dass nur vom Hersteller die Energiequellen getauscht werden können. Eine Umsetzung ist, dass die Kapseleinheit und/oder die Energiequelle bei unbefugter Öffnung zerstört wird. Dies hat den Vorteil, dass Sicherheitsauflagen nicht durch unbefugte Benutzung verletzt werden können und dass so möglicherweise höchst gefährliche Situationen vermieden werden. Es wird also sichergestellt, dass der für Explosionen gefährliche Teil, der durch die Energiequelle gegeben ist, nur dem Hersteller zugänglich ist. Durch die Kapseleinheit ist also die Energiequelle als Ganzes ein Ersatzteil.

Die erfindungsgemässige Ausgestaltung sieht vor, dass mindestens eine Spannungsbegrenzungseinheit und/oder mindestens eine Strombegrenzungseinheit in der Kapseleinheit vorgesehen ist. Hiermit ist es möglich, dass die Energiequelle im explosionsgefährdeten Bereich selbst ausgetauscht werden kann, da keine zu hohen Spannungen und keine zu hohen Ströme bzw. Erwärmungen auftreten. Dies ist ein großer Vorteil, da üblicherweise das Austauschen einer Batterie dazu führt, dass mit dem Messgerät der gefährdete Bereich verlassen oder dass z.B. ein Tank entleert werden muss.

Eine vorteilhafte Ausgestaltung beinhaltet, dass es sich bei der Spannungsbegrenzungseinheit um mindestens einen Vorwiderstand handelt. Dies ist eine sehr einfache und preiswerte Realisierung, durch die eine Ausgangsspannung derart reduziert wird, dass keine Spannung auftritt, die zur Explosion führen könnte. Die Größe des Widerstandes hängt dabei auch von der Dimensionierung der Energiequelle ab.

Eine vorteilhafte Ausgestaltung beinhaltet, dass es sich bei der Strombegrenzungseinheit um mehrere Vorwiderstände handelt. Hierdurch wird der Strom bzw. wird die damit einhergehende Erwärmung auf mehrere Einzelwiderstände verteilt. Dadurch wird ebenfalls eine mögliche Explosion durch die Erwärmung ausgeschlossen. Weiterhin sind diese Vorwiderstände auch eine sehr einfache und preisgünstige Realisierung. Es liegt nahe, die Vorwiderstände der Spannungsbegrenzung und der Strombegrenzung passend zu kombinieren. Auch hier ist die Dimensionierung der Widerstände jedoch von der Energiequelle und auch von den Bedingungen des explosionsgefährdeten Bereiches abhängig.

Eine vorteilhafte Ausgestaltung sieht vor, dass mindestens eine Einschalteinheit vorgesehen ist, die die Energieversorgung des Messgerätes durch die Energieversorgungseinheit aktiviert. Handelt es sich um eine Energiequelle mit limitiertem Energiegehalt, so ist es sinnvoll, dass das Messgerät nicht ständig misst, sondern eingeschaltet werden muss. Der Vorteil liegt in der Erhöhung der Lebensdauer der Energiequelle, weil sie nicht ständig benutzt wird. Eine Ausgestaltung sieht vor, dass auch eine Ausschalteinheit vorgesehen ist, über die die Energieversorgung ausgeschaltet wird, wobei auch ein wiederholtes Betätigen der Einschalteinheit nach dem Einschalten diese Funktion haben kann.

Eine vorteilhafte Ausgestaltung sieht vor, dass mindestens eine Zeitbegrenzungseinheit vorgesehen ist, die nach einer einstellbaren Zeitspanne die Energieversorgung des Messgerätes durch die Energieversorgungseinheit abschaltet. Dies ist besonders vorteilhaft, weil es vorkommen kann, dass das Ausschalten der Energieversorgung vergessen wird. Die Zeitspanne wird entweder ab Werk eingegeben oder sie ist über eine entsprechende Einheit einstellbar. So lassen sich z.B. auch größere Zeiträume vorgeben, wenn z.B. ein ganzer Prozess, wie z.B. das Befüllen eines Tankes beobachtet werden soll. Eine andere Idee, um den Energieverbrauch zu vermindern und somit die Lebensdauer zu erhöhen, besteht darin, dass ein entsprechender Abgleich durchgeführt wird. Die meisten Messgeräte übertragen ihre Messwerte mit einem 4...20 mA Signal. Die absolute Stromhöhe ist weniger relevant, so dass z.B. der obere Wert herabgesetzt werden kann, was den Stromverbrauch reduziert. Dies kann über einen entsprechenden Abgleich geschehen.

Eine vorteilhafte Ausgestaltung beinhaltet, dass mindestens eine Kontrolleinheit vorgesehen ist, die die Energiequelle hinsichtlich ihres Energiegehaltes überprüft. Damit ist eine entsprechende Anzeige verbunden, die anzeigt, ob der Energiegehalt noch ausreichend oder ob er unter einen gewissen Wert gefallen ist. Es kann z.B. auch nur zwischen Energie und keiner Energie unterschieden werden. Ein Schwellwert würde es jedoch erlauben, früh genug den Austausch der Energiequelle in die Wege zu leiten.

Die erfindungsgemässige Ausgestaltung sieht vor, dass die Energieversorgungseinheit eine modulare Einheit ist. Dies erlaubt es, die Energieversorgungseinheit mit einem beliebigen Messgerät zu verbinden und dieses zu betreiben. Dies kann sehr kostengünstig sein. Weiterhin wird der weite Anwendungsbereich und die Mobilität durch den modularen Aufbau auch dadurch unterstützt, dass das Betreiben und Anbringen in explosionsgefährdeten Bereichen möglich ist, so dass dort ein Anschließen und das Messen möglich sind. Zum modularen Aufbau gehört dann auch eine Verbindungseinheit mit Abdichtvorrichtungen, die eine lösbare Verbindung ermöglicht. Eine Umsetzung sieht weiterhin noch vor, dass die Energieversorgungseinheit über eine Adaptereinheit ausrichtbar ist, so dass das Anbringen und die Verwendung erleichtert werden.

Die Erfindung wird anhand der nachfolgenden Zeichnungen näher erläutert. Es zeigt:
- Fig. 1:: ein Blockschaltbild des Messgerätes und der Energieversorgungseinheit;
- Fig. 2:: ein Ersatzschaltbild der Energiequelle mit Strom- und Spannungsbeschränkung; und
- Fign. 3a und 3b,: eine Darstellung der Verbindung der Energieversorgungseinheit mit einem Messgerät.

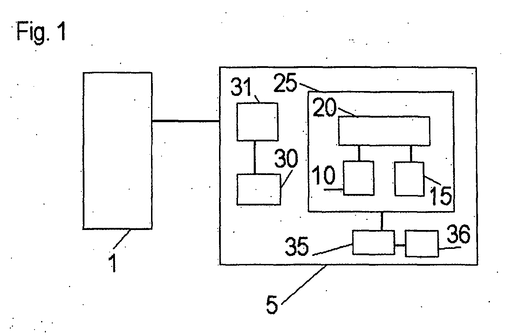

Fig. 1 zeigt ein Blockschaltbild des Messgerätes 1 und der Energieversorgungseinheit 5. Das Medium, das vom Messgerät 1 gemessen wird, ist nicht graphisch dargestellt. Ebenso fehlt, dass es sich hier bei einer Anwendung in einem explosionsgefährdeten Bereich handelt. In der Energieversorgungseinheit 5 befindet sich die Kapseleinheit 25. In dieser Kapseleinheit 25 befindet sich die eigentliche Energiequelle 20, der eine Spannungsbegrenzungseinheit 10 und eine Strombegrenzungseinheit 15 vorgelagert sind. Beide haben den Vorteil, dass dadurch der Betrieb in einem explosionsgefährdeten Bereich und vor allem auch der Austausch der Energiequelle 20, bzw. der Kapseleinheit 25 in einem solchen Bereich möglich sind. Die Kapseleinheit 25 ist z.B. derart als Ersatzteil ausgestaltet, dass eine Manipulation an ihr dazu führt, dass sie zerstört wird. Es wird also immer nur die gesamte Kapseleinheit 25 mit Energiequelle 20 und den beiden Begrenzungseinheiten 10, 15 ausgetauscht. Dadurch ist zum einen gesichert, dass sich auch beim Austausch durch die Begrenzungseinheiten 10, 15 keine Explosion ereignen kann. Zum anderen können keine Änderungen an der Energiequelle 20 vorgenommen werden, die den Schutz aufheben könnten. Die Energiequelle 20, bzw. die Kapseleinheit 25 ist mit einer Kontrolleinheit 35 verbunden. Diese ist so ausgestaltet, dass sie über eine Anzeigeeinheit 36 Information über den Energiegehalt der Energiequelle 20 liefert. Dies hat den Vorteil, dass früh genug der Tausch der Kapseleinheit 25 vorbereitet werden kann. Weiterhin ist noch eine Einschalteinheit 30 vorgesehen, in der z.B. durch einen Drucktaster die Verbindung zwischen der Energieversorgungseinheit 5 und dem Messgerät 1 hergestellt wird, dass also die Energieversorgungseinheit 5 das Messgerät 1 mit Energie versorgt. Damit verbunden ist hier eine Zeitbegrenzungseinheit 31, die nach einer gewissen Zeit die Energieversorgung wieder unterbricht, so dass die Lebensdauer der Energiequelle 20 dadurch erhöht wird, dass nur bei Bedarf Energie bereitgestellt wird. Ein Standardwert für die Zeitspanne dürfte für reine Kontrollaufgaben ca. 30 sec. betragen. Diese Zeitspanne hängt jedoch auch von der speziellen Anwendung ab.

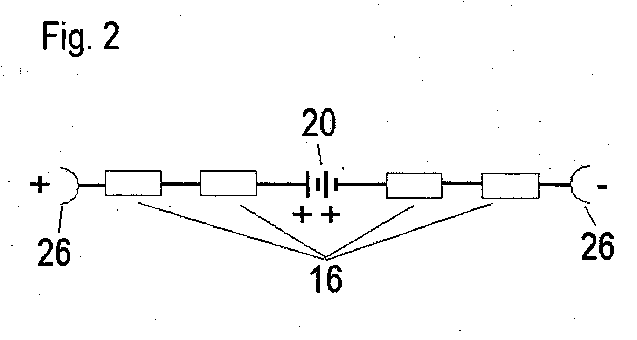

Fig. 2 zeigt die Schaltung der Energiequelle 20, bei der es sich hier um zwei Batterien handelt, mit hier vier Vorwiderständen 16, die als Strom- und Spannungsbegrenzungseinheiten 10, 15 funktionieren. Eine solche Einheit befindet sich in der Kapseleinheit 25. Es finden sich auch zwei Buchsen 26, die von der Kapseleinheit 25 den Abgriff der Energie erlauben.

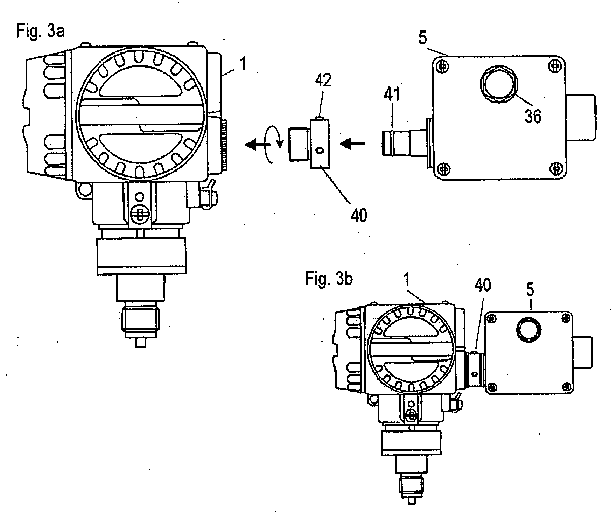

In Fign. 3a und 3b findet sich eine Darstellung der Verbindung der Energieversorgungseinheit 5 mit dem Messgerät 1. Bei dem Messgerät 1 handelt es sich beispielsweise um den Cerabar, der von der Anmelderin für die Druckmessung hergestellt und vertrieben wird. Beide werden verbunden über eine Adaptereinheit 40, die z.B. mit Gewindeschrauben 42 fixiert wird. Über diese Adaptereinheit 40 ist z.B. auch die Ausrichtung der Energieversorgungseinheit 5 möglich. Auf der Seite der Energieversorgungseinheit 5 befindet sich ein O-Ring 41, der die Verbindung gegenüber Verschmutzung, Feuchtigkeit usw. abdichtet. Die Anzeigeeinheit 36 ist beispielsweise eine Glaseinheit, hinter der sich zwei LEDs befinden, die beispielsweise rot und grün leuchten, um den Energiezustand der Energiequelle 20 zu signalisieren. Die Pfeile in Fig. 3a bezeichnen die Richtung, in die die Energieversorgungseinheit 5 mit dem Messgerät 1 verbunden wird. Die Adaptereinheit 40 lässt sich drehen und ermöglicht so die Ausrichtung der Energieversorgungseinheit 5. Dargestellt sind an der Adaptereinheit die Gewindeschrauben 42, die ein Fixieren erlaubt. In Fig. 3b ist das Ergebnis der Verbindung dargestellt.

### Bezugszeichenliste

- 1: Messgerät
- 5: Energieversorgungseinheit
- 10: Spannungsbegrenzungseinheit
- 15: Strombegrenzungseinheit
- 16: Vorwiderstand
- 20: Energiequelle
- 25: Kapseleinheit
- 26: Buchse
- 30: Einschalteinheit
- 31: Zeitbegrenzungseinheit
- 35: Kontrolleinheit
- 36: Anzeigeeinheit
- 40: Adaptereinheit
- 41: O-Ring
- 42: Gewindeschraube

## Patentansprüche

1. Modulare Energieversorgungseinheit (5) für ein Messgerät (1) zur Bestimmung und/oder Überwachung einer physikalischen oder chemischen Prozessgröße eines Mediums,
wobei in der Energieversorgungseinheit (5) mindestens eine Energiequelle (20),
mindestens eine Spannungsbegrenzungseinheit (10) und/oder mindestens eine Strombegrenzungseinheit (15) vorgesehen sind,
wobei die Spannungsbegrenzungseinheit (10) derartig ausgestaltet ist, dass auftretende Spannungen unter einem Wert bleiben, der in einem explosionsgefährdeten Bereich zu einer Explosion führt,
und/oder
wobei die Strombegrenzungseinheit (15) derartig ausgestaltet ist, dass auftretende Ströme und/oder damit verbundene Erwärmungen unter einem Wert bleiben, der in einem explosionsgefährdeten Bereich zu einer Explosion führt, **dadurch gekennzeichnet, dass** die Energiequelle, die Spannungsbegrenzungseinheit und/oder die Strombegrenzungseinheit in einer austauschbaren Kapseleinheit befindlich sind.

2. Vorrichtung nach Anspruch 1,
**dadurch gekennzeichnet,**
**dass** es sich bei der Energiequelle (20) um mindestens eine Batterie und/oder mindestens eine Brennstoffzelle handelt.

3. Vorrichtung nach Anspruch 1,
**dadurch gekennzeichnet,**
**dass** es sich bei der Strombegrenzungseinheit (15) um mehrere Vorwiderstände (16) handelt.

4. Vorrichtung nach Anspruch 1,
**dadurch gekennzeichnet,**
**dass** mindestens eine Einschalteinheit (30) vorgesehen ist, die die Energieversorgung des Messgerätes (1) durch die Energieversorgungseinheit (5) aktiviert.

5. Vorrichtung nach Anspruch 1 oder 4,
**dadurch gekennzeichnet,**
**dass** mindestens eine Zeitbegrenzungseinheit (31) vorgesehen ist, die nach einer einstellbaren Zeitspanne die Energieversorgung des Messgerätes (1) durch die Energieversorgungseinheit (5) abschaltet.

6. Vorrichtung nach Anspruch 1 oder 4,
**dadurch gekennzeichnet,**
**dass** mindestens eine Kontrolleinheit (35) vorgesehen ist, die die Energiequelle (20) hinsichtlich ihres Energiegehaltes überprüft.

## Claims

1. A modular energy supply unit (5) for a measuring instrument (1) for determining and/or monitoring a physical or chemical process variable of a medium, at least one energy source (20), at least one voltage limiting unit (10) and/or at least one current limiting unit (15) being provided in the energy supply unit (5), the voltage limiting unit (10) being designed in such a way that occurring voltages remain below a value that leads to an explosion in a region at risk of explosion,
and/or
the current limiting unit (15) being designed in such a way that occurring currents and/or heatings associated therewith remain below a value that leads to an explosion in a region at risk of explosion,
**characterised in that** the energy source, the voltage limiting unit and/or the current limiting unit are located in a replaceable capsule unit.

2. A device according to Claim 1,
**characterised in that** the energy source (20) is at least one battery and/or at least one fuel cell.

3. A device according to Claim 1,
**characterised in that** the current limiting unit (15) is several series resistors (16).

4. A device according to Claim 1,
**characterised in that** at least one switching-on unit (30) is provided, which activates the energy supply of the measuring instrument (1) by an energy supply unit (5).

5. A device according to Claim 1 or 4,
**characterised in that** at least one time-limiting unit (31) is provided, which switches off the energy supply of the measuring instrument (1) by the energy supply unit (5) after an adjustable period of time.

6. A device according to Claim 1 or 4,
**characterised in that** at least one monitoring unit (35) is provided, which checks the energy source (20) with regard to its energy content.

## Revendications

1. Unité d'alimentation en énergie (5) modulaire destinée à un appareil de mesure (1) en vue de la détermination et/ou la surveillance d'une grandeur de process physique ou chimique d'un produit,
l'unité d'alimentation en énergie (5) comportant au minimum une source d'énergie (20),
**caractérisée en ce que**
au moins une unité de limitation de tension (10) et/ou au moins une unité de limitation de courant (15) sont prévues,
l'unité de limitation de tension (10) étant conçue de telle manière à maintenir les tensions générées sous une valeur, laquelle conduit à une explosion dans une zone explosible, et/ou
l'unité de limitation de courant (15) étant conçue de telle manière à maintenir les courants générés et/ou les échauffements en résultant sous une valeur, laquelle conduit à une explosion dans une zone explosible,
**caractérisée en ce que** la source d'énergie (20), l'unité de limitation de tension (10) et/ou l'unité de limitation de courant (15) se trouvent dans une unité de blindage (25) interchangeable.

2. Dispositif selon revendication 1,
**caractérisée en ce que**
concernant la source d'énergie (20), il s'agit au minimum d'une pile électrique et/ou d'une pile à combustible.

3. Dispositif selon revendication 1,
**caractérisée en ce que**
concernant l'unité dé limitation de courant (15), il s'agit de plusieurs résistances série (16).

4. Dispositif selon revendication 1,
**caractérisée en ce qu'**
il est prévu au minimum une unité d'activation (30), qui active l'alimentation en énergie de l'appareil de mesure (1) parie biais de l'unité d'alimentation en énergie (5).

5. Dispositif selon revendication 1 ou 4,
**caractérisée en ce qu'**
il est prévu au minimum une unité de limitation de temps (31) qui, après un laps de temps réglable, désactive l'alimentation en énergie de l'appareil de mesure (1) par le biais de l'unité d'alimentation en énergie (5).

6. Dispositif selon revendication 1 ou 4,
**caractérisée en ce qu'**
il est prévu au minimum une unité de contrôle (35), laquelle contrôle le contenu énergétique de la source d'énergie (20).
